# EUROPÄISCHE PATENTANMELDUNG

(11) **EP 4 488 085 A1**
(43) Veröffentlichungstag der Anmeldung: **08.01.2025**
(21) Anmeldenummer: 24178614.4
(22) Anmeldetag: 28.05.2024
(51) Int. Cl.: B60H 1/34

(54) **LÜFTUNGSVORRICHTUNG FÜR EIN KRAFTFAHRZEUG**

(30) Priorität: 03.07.2023 DE 102023206248
(71) Anmelder: Volkswagen Aktiengesellschaft, 38440 Wolfsburg (DE)
(72) Erfinder: MASLOVATTY, Oleksandr, 38238 Salzgitter (DE); BÖTTCHER, Eike, 38108 Braunschweig (DE); THOMSCHKE, Christoph, 38100 Salzgitter (DE)

(57) **Zusammenfassung**

Lüftungsvorrichtung (2) zur Belüftung eines Innenraums eines Kraftfahrzeugs, aufweisend einen Lüftungskanal mit einer Ausströmöffnung (6) einer Breite (B) und einer Höhe (H), eine Mehrzahl von innerhalb des Lüftungskanals angeordneten vertikalen Lamellen (8) zur Ablenkung eines Luftstroms in einer horizontalen Richtung (HR), eine innerhalb des Lüftungskanals angeordnete obere horizontale Lamelle (10a) und untere horizontale Lamelle (10b) zur Ablenkung eines Luftstroms in einer vertikalen Richtung (VR), wobei die obere und untere horizontale Lamelle (10a, 10b) innerhalb des Lüftungskanals um eine Drehachse (D) drehbar und entlang einer senkrecht zur Drehachse (D) angeordneten Verschiebeachse (V) verschiebbar sind.

## Beschreibung

Die vorliegende Erfindung betrifft eine Lüftungsvorrichtung zur Belüftung eines Innenraums eines Kraftfahrzeugs sowie ein Kraftfahrzeug mit einer derartigen Lüftungsvorrichtung.

Lüftungsvorrichtungen zur Belüftung eines Innenraums eines Kraftfahrzeugs sind aus dem Stand der Technik, bspw. aus der DE 10 2009 007 037 A1, bekannt. Besonders verbreitet sind hierbei Lüftungsvorrichtungen mit verstellbaren Lamellen zum gezielten Ablenken eines Luftstroms in einen Innenraum eines Kraftfahrzeugs. Solche Lüftungsvorrichtungen weisen üblicherweise einen Lüftungskanal mit einem Luftauslass bzw. einer Ausströmöffnung und einer Mehrzahl von innerhalb des Lüftungskanals angeordneten positionsverstellbaren vertikalen und horizontalen Lamellen auf, um den Luftstrom möglichst präzise in einen Fahrgastraum lenken zu können.

Nachteiliger Weise besitzen die bekannten Lüftungsvorrichtungen in der Regel verhältnismäßig große Austrittsöffnungen zum Einführen eines Luftstroms, die notwendig sind, um einen erforderlichen Ablenkwinkel des Luftstroms zu gewährleisten. Die großen Austrittsöffnungen sind jedoch unansehnlich und erschweren eine designtechnisch ansprechende Integration einer Lüftungsvorrichtung in die Instrumententafel eines Kraftfahrzeugs. Darüber hinaus sind große Austrittsöffnungen auch aus bauraumtechnischen Aspekten nachteilig. Zwar sind aus dem Stand der Technik Systeme bekannt, die die genannten Probleme zumindest teilweise zu lösen versuchen, jedoch sind diese Lösungsansätze in der Regel komplex aufgebaut und umfassen eine Vielzahl von Bauteilen, sodass diese Systeme aus konstruktiven Gesichtspunkten und Kostengründen keine geeigneten Alternativen darstellen.

Es ist daher die Aufgabe der vorliegenden Erfindung, die voranstehend beschriebenen Nachteile einer Lüftungsvorrichtung für ein Kraftfahrzeug zumindest teilweise zu beheben. Insbesondere ist es die Aufgabe der vorliegenden Erfindung, eine Lüftungsvorrichtung für ein Kraftfahrzeug zur Verfügung zu stellen, die auf konstruktiv einfache und kostengünstige Weise herstellbar und betreibbar ist, ein äußerlich ansprechendes Design aufweist, kompakt ausgebildet ist und einen großen Ablenkwinkel beim Einführen eines Luftstroms in einen Fahrgastraum eines Kraftfahrzeugs garantiert.

Die voranstehende Aufgabe wird durch die Patentansprüche gelöst. Demnach wird die Aufgabe durch eine Lüftungsvorrichtung mit den Merkmalen des unabhängigen Anspruchs 1 sowie durch ein Kraftfahrzeug mit den Merkmalen des nebengeordneten Anspruchs 11 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Lüftungsvorrichtung beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Erfindungsgemäß ist eine Lüftungsvorrichtung zur Belüftung eines Innenraums eines Kraftfahrzeugs vorgesehen. Hierbei weist die erfindungsgemäße Lüftungsvorrichtung einen Lüftungskanal mit einer Ausströmöffnung einer Breite und einer Höhe, eine Mehrzahl von innerhalb des Lüftungskanals angeordneten vertikalen Lamellen zur Ablenkung eines Luftstroms in einer horizontalen Richtung, eine innerhalb des Lüftungskanals angeordnete obere horizontale Lamelle sowie eine untere horizontale Lamelle zur Ablenkung eines Luftstroms in einer vertikalen Richtung auf. Erfindungsgemäß ist dabei vorgesehen, dass die obere und untere horizontale Lamelle innerhalb des Lüftungskanals um eine Drehachse drehbar und entlang einer senkrecht zur Drehachse angeordneten Verschiebeachse verschiebbar sind.

Erfindungsgemäß ist also die Lüftungsvorrichtung, durch die vorgesehene Anordnung einer um eine Drehachse drehbaren und entlang einer senkrecht zur Drehachse angeordneten Verschiebeachse verschiebbaren oberen und unteren Lamelle innerhalb eines Lüftungskanals, dazu ausgelegt, auf konstruktiv einfache und kostengünstige Weise herstellbar zu sein und gleichzeitig eine kompakte, äußerlich ansprechende Form zu garantieren, die einen großen Ablenkwinkel beim Einführen eines Luftstroms in einen Fahrgastraum eines Kraftfahrzeugs ermöglicht.

Durch die vorgesehene flexible und vielseitige Beweglichkeit der oberen und unteren horizontalen Lamelle ist es insbesondere möglich, mit der Anordnung von bereits zwei horizontalen Lamellen bereits einen großen Ablenkwinkel beim Einführen eines Luftstroms in einen Fahrgastraum eines Kraftfahrzeugs zu garantieren und dadurch gleichzeitig ein kompaktes, äußerlich ansprechendes Design zu schaffen, das auch einfach und kostengünstig herstellbar ist.

Die erfindungsgemäße Lüftungsvorrichtung kann vorzugsweise im Armaturenbereich eines Kraftfahrzeugs angeordnet sein. Es versteht sich, dass die erfindungsgemäße Lüftungsvorrichtung nicht nur in Kraftfahrzeugen, wie Personenkraftwagen oder Lastkraftwagen, sondern auch in Zügen, Bahnen, Flugzeugen oder Schiffen eingesetzt werden kann. Die Breite der gegenständlichen Ausströmöffnung kann hierbei vorzugsweise größer sein, als die Höhe der Ausströmöffnung. Es versteht sich, dass sich die Bezeichnungen "horizontal" und "vertikal" in Bezug auf die Ausrichtung der Lamellen insbesondere in Bezug auf einander verstanden werden können und nicht in Bezug auf eine Fahrzeugachse. So kann eine erfindungsgemäße Lüftungsvorrichtung bspw. gedreht innerhalb eines Kraftfahrzeugs angeordnet sein, sodass die Lamellen nicht vertikal oder horizontal zur Fahrzeugachse, aber dennoch horizontal und vertikal zueinander ausgerichtet sein können. Eine solche Ausführung einer Lüftungsvorrichtung soll vorzugsweise ebenfalls vom Schutzumfang der Anmeldung umfasst sein. Darüber hinaus versteht es sich, dass die vertikalen und horizontalen Lamellen bspw. bei einer 90°-Drehung einer erfindungsgemäßen Lüftungsvorrichtung auch vertauscht sein können, was vorzugsweise ebenfalls vom Schutzumfang der Anmeldung umfasst sein soll. Es versteht sich darüber hinaus, dass die erfindungsgemäßen Ausrichtungen marginal von einer perfekt horizontalen und vertikalen Position abweichen können, bspw. um jeweils 5 %, was vorzugsweise dennoch vom Schutzumfang der Anmeldung umfasst sein soll.

Im Hinblick auf eine konstruktiv einfache Ausführung zur Gewährleistung einer exakten Einstellbarkeit bzw. Positionierbarkeit eines Luftstroms zur Einleitung in einen Innenraum eines Kraftfahrzeugs kann erfindungsgemäß vorteilhafterweise vorgesehen sein, dass die obere und untere horizontale Lamelle unabhängig voneinander um die Drehachse drehbar und/oder unabhängig voneinander entlang der senkrecht zur Drehachse angeordneten Verschiebeachse verschiebbar sind. Eine unabhängige Drehbarkeit bzw. Verschiebbarkeit kann hierbei insbesondere bedeuten, dass nur eine Lamelle in seiner Position verstellbar ist und die andere Lamelle in seiner Position verbleibt.

Im Rahmen einer besonders schnellen und konstruktiv unaufwändigeren Verstellung eines Luftstroms kann alternativ ebenso vorgesehen sein, dass die obere und untere horizontale Lamelle kinematisch gekoppelt um die Drehachse drehbar und/oder kinematisch gekoppelt entlang der senkrecht zur Drehachse angeordneten Verschiebeachse verschiebbar sind, wobei eine kinematisch gekoppelte Drehung um die Drehachse und/oder eine kinematisch gekoppelte Verschiebung entlang der Verschiebeachse für die obere und untere horizontale Lamelle gegenläufig erfolgt. Zur Gewährleistung einer kinematischen Kopplung einer Bewegung der oberen und unteren Lamelle kann dabei vorzugweise ein Koppelelement oder dergleichen vorgesehen sein, das zwischen der oberen und unteren Lamelle angeordnet wird.

Zur effizienten Führung eines Luftstroms in einen Innenraum eines Kraftfahrzeugs kann erfindungsgemäß ferner vorgesehen sein, dass die obere und untere horizontale Lamelle eine gekrümmte Form aufweisen, wobei die die obere und untere horizontale Lamelle vorzugsweise auf einander zu gekrümmt ausgebildet und innerhalb des Lüftungskanals angeordnet sind.

Im Hinblick auf eine konstruktiv einfach herstellbare Ausführung unter Minimierung einer Anzahl von beteiligten Bauteilen ist es gegenständlich ferner denkbar, dass die Anzahl der vorgesehenen horizontalen Lamellen auf die obere und untere Lamelle beschränkt ist.

Ebenso kann im Hinblick auf eine konstruktiv einfach herstellbare Ausführung unter Minimierung einer Anzahl von beteiligten Bauteilen, erfindungsgemäß vorteilhafterweise vorgesehen sein, dass zumindest drei, vorzugsweise mehr als drei vertikale Lamellen innerhalb des Lüftungskanals angeordnet sind.

Im Rahmen einer besonders komfortablen Ausführung einer Lüftungsvorrichtung zur Einführung eines Luftstroms ist es ferner denkbar, dass die obere und untere horizontale Lamelle stufenlos um die Drehachse drehbar und/oder stufenlos entlang einer senkrecht zur Drehachse angeordneten Verschiebeachse verschiebbar sind.

Ebenso kann es im Hinblick auf eine konstruktiv einfach herstellbare Ausführung zur Gewährleistung einer exakten Positionierbarkeit eines Luftstroms in den Innenraum eines Kraftfahrzeugs vorgesehen sein, dass die obere und untere horizontale Lamelle in vorbestimmten oder vorbestimmbaren Stufen um die Drehachse drehbar und/oder in vorbestimmten oder vorbestimmbaren Stufen entlang einer senkrecht zur Drehachse angeordneten Verschiebeachse verschiebbar sind.

Im Rahmen eines flexiblen und vielseitigen Betriebs der erfindungsgemäßen Lüftungsvorrichtung kann gegenständlich ferner vorgesehen sein, dass die vertikalen Lamellen und/oder die obere und untere horizontale Lamelle manuell und/oder motorisch um die Drehachse drehbar und/oder manuell und/oder motorisch entlang der senkrecht zur Drehachse angeordneten Verschiebeachse verschiebbar sind.

Im Hinblick auf eine konstruktiv einfach herstellbare Ausführung zur Gewährleistung einer exakt definierbaren Positionierbarkeit eines Luftstroms in den Innenraum eines Kraftfahrzeugs, ist es ferner denkbar, dass eine Kulissenführung zur Verstellung der vertikalen Lamellen und/oder der oberen und unteren horizontalen Lamelle vorgesehen ist.

Ebenfalls Gegenstand der Erfindung ist ferner ein Kraftfahrzeug, umfassend eine voranstehend beschriebene Lüftungsvorrichtung. Damit bringt das erfindungsgemäße Kraftfahrzeug die gleichen Vorteile mit sich, wie sie bereits ausführlich in Bezug auf die erfindungsgemäße Lüftungsvorrichtung beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen schematisch:
- Figur 1: eine erfindungsgemäße Lüftungsvorrichtung für ein Kraftfahrzeug gemäß einem ersten Ausführungsbeispiel in einer räumlichen Darstellung mit einem vollständigen Gehäuse (links) und ohne einen oberen Teil des Gehäuses (rechts),
- Figur 2: eine erfindungsgemäße Lüftungsvorrichtung für ein Kraftfahrzeug gemäß einem ersten Ausführungsbeispiel in einer Schnittdarstellung in einer ersten, zweiten und dritten Einstellung (links, Mitte, rechts),
- Figur 3: eine erfindungsgemäße Lüftungsvorrichtung für ein Kraftfahrzeug gemäß einem zweiten Ausführungsbeispiel in einer Schnittdarstellung in einer ersten, zweiten und dritten Einstellung (links, Mitte, rechts),
- Figur 4: eine erfindungsgemäße Lüftungsvorrichtung für ein Kraftfahrzeug gemäß einem dritten Ausführungsbeispiel in einer Schnittdarstellung in einer ersten, zweiten und dritten Einstellung (links, Mitte, rechts).

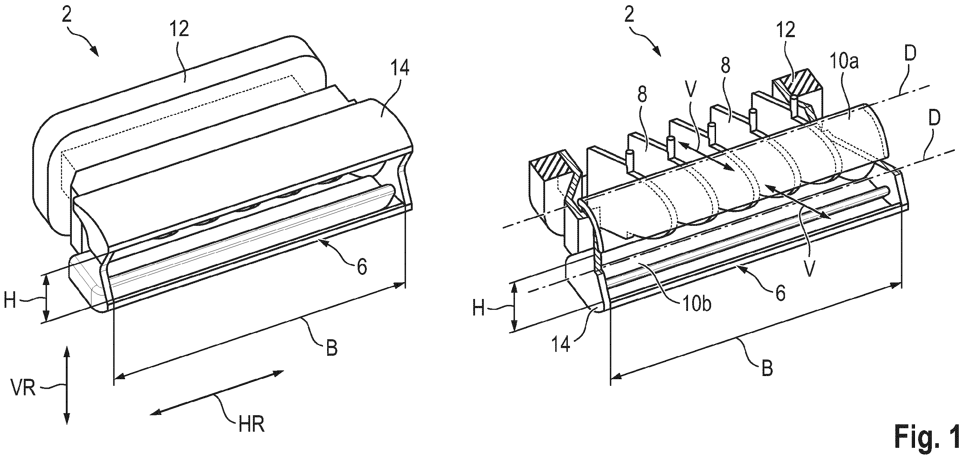

Figur 1 zeigt eine erfindungsgemäße Lüftungsvorrichtung 2 für ein Kraftfahrzeug gemäß einem ersten Ausführungsbeispiel in einer räumlichen Darstellung mit einem vollständigen Gehäuse 14 und vollständiger Dichtung 12 (links) und ohne einen oberen Teil des Gehäuses 14 und der Dichtung 12 (rechts) zur besseren Sicht auf das Innere der Lüftungsvorrichtung 2.

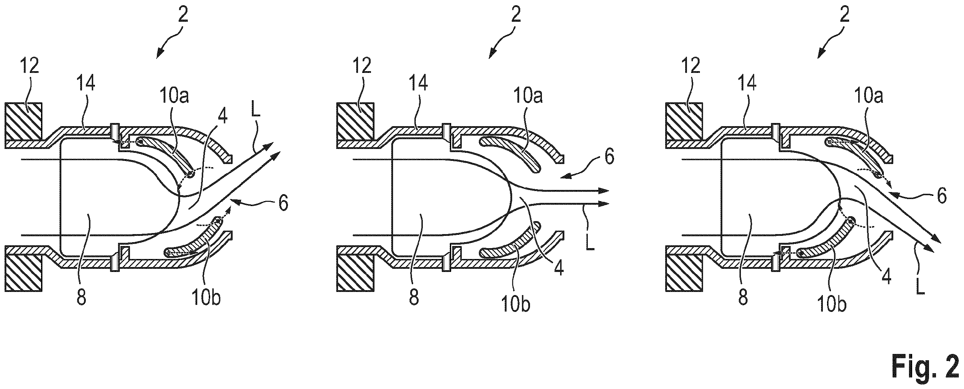

Wie gemäß Figur 1 zu erkennen ist, umfasst die Lüftungsvorrichtung 2 einen Lüftungskanal 4 (siehe Figuren 2 bis 4) mit einer Ausströmöffnung 6 einer Breite B und einer Höhe H, eine Mehrzahl von innerhalb des Lüftungskanals 4 angeordneten vertikalen Lamellen 8 zur Ablenkung eines Luftstroms L (siehe Figuren 2 bis 4) in einer horizontalen Richtung HR sowie eine innerhalb des Lüftungskanals 4 angeordnete obere horizontale Lamelle 10a und untere horizontale Lamelle 10b zur Ablenkung eines Luftstroms L in einer vertikalen Richtung VR, wobei die obere und untere horizontale Lamelle 10a, 10b innerhalb des Lüftungskanals 4 um eine Drehachse D drehbar und entlang einer senkrecht zur Drehachse D angeordneten Verschiebeachse V verschiebbar sind.

Die obere und untere horizontale Lamelle 10a, 10b können hierbei unabhängig voneinander um die Drehachse D drehbar und/oder unabhängig voneinander entlang der senkrecht zur Drehachse D angeordneten Verschiebeachse V verschiebbar sein.

Ebenso ist es auch denkbar, dass die obere und untere horizontale Lamelle 10a, 10b kinematisch gekoppelt um die Drehachse D drehbar und/oder kinematisch gekoppelt entlang der senkrecht zur Drehachse D angeordneten Verschiebeachse V verschiebbar ausgebildet sind.

Die obere und untere horizontale Lamelle 10a, 10b weisen, wie vorliegend erkennbar, eine auf einander zu gekrümmte Form auf.

Neben den beiden horizontalen Lamellen 10a, 10b weist die Lüftungsvorrichtung 2 zudem insgesamt fünf vertikale Lamellen 8 auf.

Figur 2 zeigt eine erfindungsgemäße Lüftungsvorrichtung 2 für ein Kraftfahrzeug gemäß einem ersten Ausführungsbeispiel in einer Schnittdarstellung in einer ersten, zweiten und dritten Einstellung (links, Mitte, rechts).

Gemäß dem ersten Ausführungsbeispiel werden für eine Ablenkung eines Luftstroms L nach oben (erste Einstellung) und nach unten (dritte Einstellung) die obere und untere horizontale Lamelle 10a, 10b jeweils gegenläufig zueinander um eine Drehachse D gedreht und/oder senkrecht zur Drehachse D entlang einer Verschiebeachse V verschoben. In der neutralen Stellung (zweite Einstellung) erfolgt keine Verstellung und entsprechend keine Ablenkung des Luftstroms L.

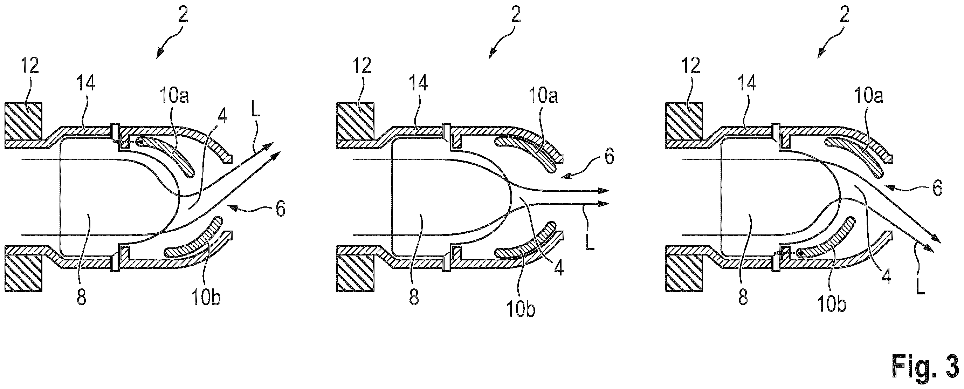

Figur 3 zeigt eine erfindungsgemäße Lüftungsvorrichtung 2 für ein Kraftfahrzeug gemäß einem zweiten Ausführungsbeispiel in einer Schnittdarstellung in einer ersten, zweiten und dritten Einstellung (links, Mitte, rechts).

Gemäß dem zweiten Ausführungsbeispiel werden für eine Ablenkung eines Luftstroms L nach oben (erste Einstellung) und nach unten (dritte Einstellung) nur jeweils die obere horizontale Lamelle 10a (Ablenkung nach oben) oder untere horizontale Lamelle 10b senkrecht zur Drehachse D entlang der Verschiebeachse V verschoben. In der neutralen Stellung (zweite Einstellung) erfolgt keine Verstellung und entsprechend keine Ablenkung des Luftstroms L.

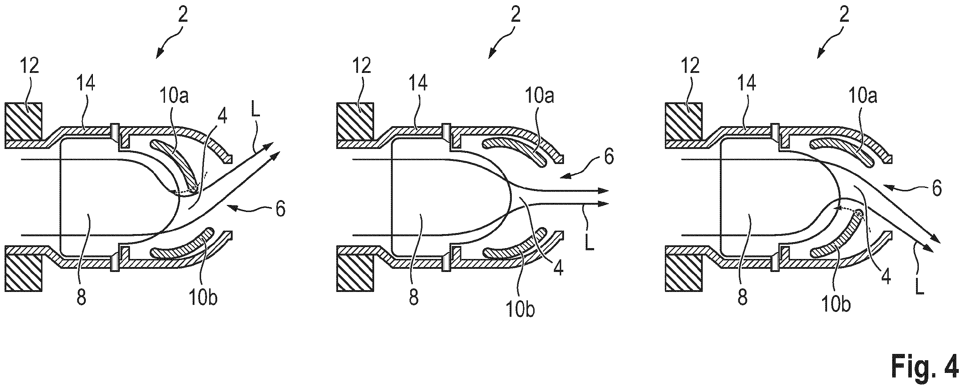

Figur 4 zeigt eine erfindungsgemäße Lüftungsvorrichtung 2 für ein Kraftfahrzeug gemäß einem dritten Ausführungsbeispiel in einer Schnittdarstellung in einer ersten, zweiten und dritten Einstellung (links, Mitte, rechts).

Gemäß dem dritten Ausführungsbeispiel werden für eine Ablenkung eines Luftstroms L nach oben (erste Einstellung) und nach unten (dritte Einstellung) nur jeweils die obere horizontale Lamelle 10a (Ablenkung nach oben) oder untere horizontale Lamelle 10b um die Drehachse D gedreht. In der neutralen Stellung (zweite Einstellung) erfolgt keine Verstellung und entsprechend keine Ablenkung des Luftstroms L.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 2: Lüftungsvorrichtung
- 4: Lüftungskanal
- 6: Ausströmöffnung
- 8: vertikale Lamelle
- 10a: obere horizontale Lamelle
- 10b: untere horizontale Lamelle
- 12: Dichtung
- 14: Gehäuse

- B: Breite
- H: Höhe
- L: Luftstrom
- HR: horizontale Richtung
- VR: vertikale Richtung
- D: Drehachse
- V: Verschiebeachse

## Patentansprüche

1. Lüftungsvorrichtung (2) zur Belüftung eines Innenraums eines Kraftfahrzeugs, aufweisend:
- einen Lüftungskanal (4) mit einer Ausströmöffnung (6) einer Breite (B) und einer Höhe (H),
- eine Mehrzahl von innerhalb des Lüftungskanals (4) angeordneten vertikalen Lamellen (8) zur Ablenkung eines Luftstroms (L) in einer horizontalen Richtung (HR),
- eine innerhalb des Lüftungskanals (4) angeordnete obere horizontale Lamelle (10a) und untere horizontale Lamelle (10b) zur Ablenkung eines Luftstroms (L) in einer vertikalen Richtung (VR),
**dadurch gekennzeichnet,**
**dass** die obere und untere horizontale Lamelle (10a, 10b) innerhalb des Lüftungskanals (4) um eine Drehachse (D) drehbar und entlang einer senkrecht zur Drehachse (D) angeordneten Verschiebeachse (V) verschiebbar sind.

2. Lüftungsvorrichtung (2) nach Anspruch 1,
**dadurch gekennzeichnet,**
**dass** die obere und untere horizontale Lamelle (10a, 10b) unabhängig voneinander um die Drehachse (D) drehbar und/oder unabhängig voneinander entlang der senkrecht zur Drehachse (D) angeordneten Verschiebeachse (V) verschiebbar sind.

3. Lüftungsvorrichtung (2) nach Anspruch 1 oder 2,
**dadurch gekennzeichnet,**
**dass** die obere und untere horizontale Lamelle (10a, 10b) kinematisch gekoppelt um die Drehachse (D) drehbar und/oder kinematisch gekoppelt entlang der senkrecht zur Drehachse (D) angeordneten Verschiebeachse (V) verschiebbar sind, wobei eine kinematisch gekoppelte Drehung um die Drehachse (D) und/oder eine kinematisch gekoppelte Verschiebung entlang der Verschiebeachse (V) für die obere und untere horizontale Lamelle (10a, 10b) gegenläufig erfolgt.

4. Lüftungsvorrichtung (2) nach einem der vorangehenden Ansprüche,
**dadurch gekennzeichnet,**
**dass** die obere und untere horizontale Lamelle (10a, 10b) eine gekrümmte Form aufweisen, wobei die die obere und untere horizontale Lamelle (10a, 10b) vorzugsweise auf einander zu gekrümmt ausgebildet und innerhalb des Lüftungskanals (4) angeordnet sind.

5. Lüftungsvorrichtung (2) nach einem der vorangehenden Ansprüche,
**dadurch gekennzeichnet,**
**dass** die Anzahl der vorgesehenen horizontalen Lamellen (10a, 10b) auf die obere und untere Lamelle (10a, 10b) beschränkt ist.

6. Lüftungsvorrichtung (2) nach einem der vorangehenden Ansprüche,
**dadurch gekennzeichnet,**
**dass** zumindest drei, vorzugsweise mehr als drei vertikale Lamellen (8) innerhalb des Lüftungskanals (4) angeordnet sind.

7. Lüftungsvorrichtung (2) nach einem der vorangehenden Ansprüche,
**dadurch gekennzeichnet,**
**dass** die obere und untere horizontale Lamelle (10a, 10b) stufenlos um die Drehachse (D) drehbar und/oder stufenlos entlang einer senkrecht zur Drehachse (D) angeordneten Verschiebeachse (V) verschiebbar sind.

8. Lüftungsvorrichtung (2) nach einem der vorangehenden Ansprüche,
**dadurch gekennzeichnet,**
**dass** die obere und untere horizontale Lamelle (10a, 10b) in vorbestimmten oder vorbestimmbaren Stufen um die Drehachse (D) drehbar und/oder in vorbestimmten oder vorbestimmbaren Stufen entlang einer senkrecht zur Drehachse (D) angeordneten Verschiebeachse (V) verschiebbar sind.

9. Lüftungsvorrichtung (2) nach einem der vorangehenden Ansprüche,
**dadurch gekennzeichnet,**
**dass** die vertikalen Lamellen (8) und/oder die obere und untere horizontale Lamelle (10a, 10b) manuell und/oder motorisch um die Drehachse (D) drehbar und/oder manuell und/oder motorisch entlang der senkrecht zur Drehachse (D) angeordneten Verschiebeachse (V) verschiebbar sind.

10. Lüftungsvorrichtung (2) nach einem der vorangehenden Ansprüche,
**dadurch gekennzeichnet,**
**dass** eine Kulissenführung zur Verstellung der vertikalen Lamellen (8) und/oder der oberen und unteren horizontalen Lamelle (10a, 10b) vorgesehen ist.

11. Kraftfahrzeug (80), umfassend eine Lüftungsvorrichtung (2) nach einem der Ansprüche 1 bis 10.
